## Europäisches Patentamt
## European Patent Office
## Office européen des brevets

(19)

(11) Veröffentlichungsnummer: **0 022 230**
**B1**

(12) **EUROPÄISCHE PATENTSCHRIFT**

(45) Veröffentlichungstag der Patentschrift:
16.05.84

(51) Int. Cl.³: **B 65 H 75/48**

(21) Anmeldenummer: 80103659.1

(22) Anmeldetag: 27.06.80

(54) Vorrichtung zum Aufwickeln eines langgestreckten, aufrollbaren Gegenstandes.

(30) Priorität: 06.07.79  CH 6352/79

(43) Veröffentlichungstag der Anmeldung:
14.01.81 Patentblatt 81/2

(45) Bekanntmachung des Hinweises auf die Patenterteilung:
16.05.84 Patentblatt 84/20

(84) Benannte Vertragsstaaten:
AT BE CH DE FR GB IT LI LU NL SE

(56) Entgegenhaltungen:
DE - A - 1 548 301
DE - B - 1 012 463
DE - U - 7 621 587
GB - A - 632 200
US - A - 2 151 130
US - A - 2 219 201
US - A - 3 049 317
US - A - 3 053 472
US - A - 3 054 573

(73) Patentinhaber: **Burtscher, Paul, Buhlwiesenstrasse 25,
CH-8600 Dübendorf (CH)**

(72) Erfinder: **Burtscher, Paul, Buhlwiesenstrasse 25,
CH-8600 Dübendorf (CH)**

(74) Vertreter: **Blum, Rudolf Emil Ernst, c/o E. Blum & Co
Patentanwälte Vorderberg 11, CH-8044 Zürich (CH)**

BUNDESDRUCKEREI BERLIN

## Vorrichtung zum Aufwickeln eines langgestreckten, aufrollbaren Gegenstandes

Die Erfindung betrifft eine Vorrichtung zum Aufwickeln eines langgestreckten, aufrollbaren Gegenstandes.

Vorrichtungen, die eine mit einer Spiralfeder vorgespannte Speichertrommel aufweisen, sind weit verbreitet. Beispielsweise bekannte Anwendungen sind bei aufrollbaren Meßbändern, aufrollbaren Hundeleinen und auch aufrollbaren elektrischen Leitungen, beispielsweise in Staubsaugern für den Hausgebrauch zu finden.

Die US-PS 30 49 317 zeigt eine Vorrichtung zum Aufwickeln eines langgestreckten Gegenstandes, bei welchem das innere Ende einer Spiralfeder mittels eines Getriebes mit dem äußeren Ende desselben verbunden ist, derart, daß bei einer mit einer Umdrehgeschwindigkeit erfolgenden Drehung des äußeren Endes der Spiralfeder um ihre Mittelachse das innere Ende derselben im gleichen Drehsinn wie das äußere Ende, jedoch mit einer zweiten, größeren Umdrehgeschwindigkeit um die Mittelachse dreht. Das Getriebe weist jeweils zwei miteinander drehfest verbundene, exzentrisch zur Mittelachse gelegene Zahnräder unterschiedlicher Zähnezahl auf, die jeweils über ein weiteres Zahnrad mit dem äußeren, bzw. inneren Ende der Spiralfeder verbunden sind. Weiter zeigt die US-PS 22 19 201 eine Vorrichtung zum Aufwickeln eines Schlauches, die ebenfalls zwei miteinander drehfest verbundene, exzentrisch zur Mittelachse einer Spiralfeder gelegene Zahnräder unterschiedlicher Zähnezahl aufweist, die jeweils mit einem weiteren Zahnrad kommen. Die miteinander drehfest verbundenen Zahnräder sind einseitig und drehbar an der Speichertrommel gelagert. Eines der weiteren Zahnräder ist feststehend, und beim Drehen der Speichertrommel wälzt sich eines der miteinander verbundenen Zahnräder auf das feststehende Zahnrad ab. Damit wird das andere der weiteren Zahnräder gedreht, welche ein Drehen des äußeren Endes der Spiralfeder um ihr feststehendes inneres Ende bewirkt.

Die Vorrichtung nach der US-PS 30 49 317 bedingt einen Einsatz einer großen Anzahl Sonderanfertigungen, welches äußerst hohe Gestehungskosten bedingt, und die Spiralfeder nach der US-PS 22 19 201 weist lediglich ein äußeres, mit dem Getriebe verbundenes Ende auf. Das innere Ende ist feststehend gehalten. Bei beiden Vorrichtungen ist jedoch der von der ungespannten Feder eingenommene Raum groß, und in deren Kombination sind keine Vorkehrungen vorhanden, die bei einer gegebenen Auszugslänge eines langgestreckten Gegenstandes eine Verkleinerung des von der ungespannten Feder eingenommenen Raumes schaffen.

Bei der Vorrichtung nach der DE-B-10 12 463 sind wieder Sonderanfertigungen vonnöten, und zudem ist die Lagerung der rotierenden Teile störungsanfällig.

Hier will die Erfindung Abhilfe schaffen. Die Erfindung, wie sie in den Ansprüchen gekennzeichnet ist, löst die Aufgabe, eine Vorrichtung zum Aufwickeln eines langgestreckten, aufrollbaren Gegenstandes zu schaffen.

In Kombination aus der US-A-30 49 317 und US-A-22 19 201 bekannter Merkmale weist eine erfindungsgemäße Vorrichtung ein Gehäuse auf, in welchem eine Speichertrommel angeordnet ist, und mit einer Spiralfeder, die die Speichertrommel in Aufwickelrichtung vorspannt, und ein inneres und ein äußeres mit der Speichertrommel verbundenes Ende aufweist, wobei das innere Ende der Spiralfeder mittels eines Getriebes mit dem äußeren Ende derselben verbunden ist, welches Getriebe bewirkt, daß bei einer mit einer ersten Umdrehgeschwindigkeit erfolgenden Drehung des äußeren Endes der Spiralfeder um deren Mittelachse das innere Ende der Spiralfeder im gleichen Drehsinn wie das äußere Ende derselben jedoch mit einer zweiten, kleineren Umdrehgeschwindigkeit um die Mittelachse dreht, welche Speichertrommel unverzahnt ist und welches Getriebe ein erstes und ein zweites Stirnzahnrad unterschiedlicher Zähnezahl aufweist, welche Zahnräder drehfest miteinander und mit einer Welle verbunden sind, die exzentrisch zur Mittelachse angeordnet und innerhalb des Spulenkernes der Speichertrommel in derselben einseitig und drehbar gelagert ist, ein drittes Zahnrad aufweist, welches mit dem Gehäuse fest verbunden ist und mit dem zweiten Zahnrad kämmt, und ein viertes Zahnrad aufweist, das mit dem ersten Zahnrad kämmt und mit einer Welle verbunden ist, wobei darüber hinaus die Welle des vierten Zahnrades im dritten, feststehenden Zahnrad drehbar gelagert ist, die Speichertrommel ihrerseits auf dieser Welle drehbar gelagert ist, und das innere Ende der Spiralfeder mit dieser Welle verbunden ist.

Die durch die Erfindung erreichten Vorteile sind im wesentlichen darin zu sehen, daß keine Sonderanfertigungen von Bauteilen notwendig sind, indem kein Bauteil eine Doppelfunktion wie Bandspeicher und Zahnrad ausüben muß. Weiter sind dadurch die Lagerkräfte aller sich drehenden Teile derart klein, daß ausnahmslos Gleitlager eingesetzt werden können und keine Wälzlager notwendig sind.

Nachfolgend wird der Erfindungsgegenstand anhand der Zeichnungen beispielsweise näher erläutert. Es zeigt

Fig. 1 einen Schnitt durch ein erstes Ausführungsbeispiel mit einer ersten Getriebeanordnung,

Fig. 2 einen Schnitt gleich der Fig. 1, wobei die Getriebeanordnung innerhalb der Speichertrommel angeordnet ist,

Fig. 3 einen Schnitt durch einen Teil eines Ausführungsbeispiels, wobei der Sperrkörper in seiner Eingriffsstellung gezeigt ist, und

Fig. 4 einen Schnitt gleich demjenigen der Fig. 3, wobei der Sperrkörper mittels eines Schiebers in der Freigabestellung arretiert ist.

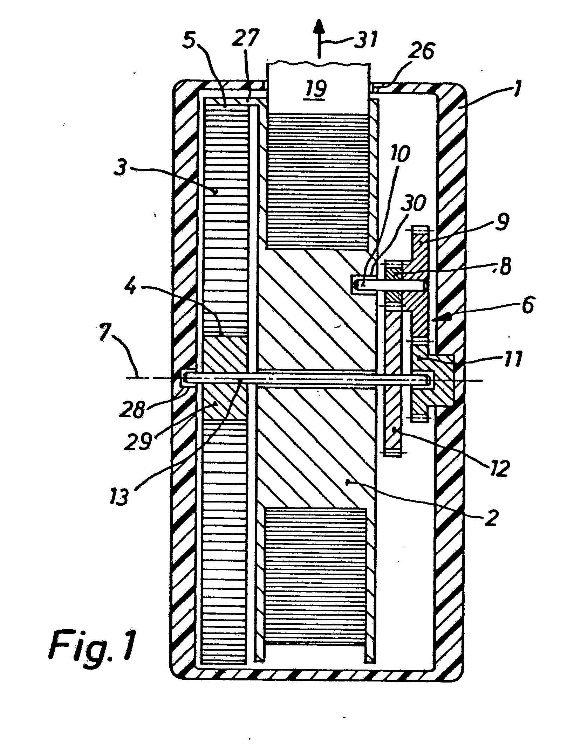

In der Fig. 1 ist ein erstes Ausführungsbeispiel dargestellt, wobei hier der langgestreckte, aufrollbare Gegenstand 19 bahnförmig ausgebildet ist, also beispielsweise eine Hundeleine oder ein Meßband ist. Er kann auch gliederförmig ausgebildet sein. Wie bereits erwähnt, kann der Gegenstand auch eine ungefähr runde Querschnittsform aufweisen, wie dies im Fall von elektrischen Leitungen oder Kabeln der Fall ist. Im Gehäuse 1 ist eine Speichertrommel 2 angeordnet, auf welcher Speichertrommel 2 der bahnförmige Gegenstand 19 aufgewickelt ist. Im oberen Ende des sonst vollständig geschlossenen Gehäuses 1 ist eine Öffnung 26 vorhanden, durch welche der aufzuwickelnde Gegenstand 19, der in diesem und dem nachfolgenden Ausführungsbeispiel ein Band ist, hinausragt. Die Speichertrommel 2 weist an einer Stelle bei ihrem Außenumfang ein Verbindungsglied 27 auf, mittels welchem die Speichertrommel 2 mit dem äußeren Ende 5 einer seitlich neben der Speichertrommel 2 angeordneten Spiralfeder 3 fest verbunden ist. Einzelheiten dieses Verbindungsgliedes 27 und der Verbindung sind nicht gezeigt, weil sie jedem Fachmann bekannt sind. Die Speichertrommel 2 ist auf einer Welle 13 drehbar gelagert. Diese Welle 13 ist bei ihrem (in der Fig. 1 gesehen) linken Ende bei 28 im Gehäuse 1 drehbar gelagert und trägt dort einen Arber 29, welcher mit dem inneren Ende 4 der Spiralfeder 3 fest verbunden ist. Somit wird bei einer Drehung der Speichertrommel 2 das äußere Ende 5 der Spiralfeder 3 um die Mittelachse 7 derselben, welche Mittelachse 7 auch die Mittelachse der Welle 13 ist, gedreht. Ein Drehen der Welle 13 ihrerseits bewirkt, daß das innere Ende 4 der Spiralfeder 3 um die Mittelachse 7 gedreht wird. In der Speichertrommel 2 ist an einer von der Mittelachse 7 entfernter Lagerstelle 30 eine Welle 10 drehbar gelagert, welche Welle 10 ein erstes Zahnrad 8 und ein zweites Zahnrad 9 trägt. Diese Zahnräder sind, wie alle Zahnräder der gezeigten Ausführungsbeispiele, stirnverzahnt. Dieses erste Zahnrad 8 ist mit dem zweiten Zahnrad 9 drehfest verbunden, und beide Zahnräder 8 und 9 sind mit der Welle 10 drehfest verbunden. Dabei ist ersichtlich, daß die Zähnezahl des ersten Zahnrades 8 kleiner als die Zähnezahl des zweiten Zahnrades 9 ist. Das zweite Zahnrad 9 kämmt mit einem dritten Zahnrad 11, welches dritte Zahnrad 11 im Gehäuse 1 drehfest gehalten ist. In diesem dritten Zahnrad 11 ist das (in der Fig. 1 gesehen) rechts liegende Ende der Welle 13 drehbar gelagert.

Das erste Zahnrad 8 kämmt mit einem vierten Zahnrad 12. Dabei ist ersichtlich, daß die Zähnezahl des dritten Zahnrades 11 kleiner als die Zähnezahl des vierten Zahnrades 12 ist. Dieses vierte Zahnrad 12 ist mit der Welle 13 drehfest verbunden.

Diese vier Zahnräder 8, 9, 11, 12 bilden zusammen ein Untersetzungsgetriebe 6.

Bei einem bevorzugten Ausführungsbeispiel weist das erste Zahnrad 8 16 Zähne, das zweite Zahnrad 9 25 Zähne, das dritte Zahnrad 11 16 Zähne und das vierte Zahnrad 12 wiederum 25 Zähne auf. Somit ergibt sich ein bevorzugtes Untersetzungsverhältnis von 0,4096. Es soll aber festgehalten werden, daß dieses Untersetzungsverhältnis nur beispielsweise ist und andere Übersetzungsverhältnisse zwischen 0,99 und 0,01, beispielsweise auch 0,5, 0,4, 0,6 etc., anwendbar sind.

Der Betrieb dieses Ausführungsbeispiels der Fig. 1 verläuft wie folgt: Es sei angenommen, daß das Band 19 in Richtung des Pfeiles 31 gezogen wird, um das Band auszuziehen. Somit beginnt sich die Speichertrommel 2 auf der Welle 13 um die Mittelachse 7 zu drehen. Folglich wird auch die Lagerstelle 30 des ersten Zahnrades 8 und des zweiten Zahnrades 9 um diese Mittelachse 7 bzw. die Welle 13 gedreht. Da nun das zweite Zahnrad 9 mit dem dritten Zahnrad 11 kämmt, welches dritte Zahnrad 11 im Gehäuse 1 drehfest gelagert ist, wälzt sich das zweite Zahnrad 9 auf dem dritten Zahnrad 11 ab. Somit dreht das erste Zahnrad 8 zusammen mit dem zweiten Zahnrad 9 mit einem Drehsinn, der demjenigen der Speichertrommel 2 entgegengesetzt ist. Das erste Zahnrad 8 kämmt nun mit dem vierten Zahnrad 12. Somit wird dieses vierte Zahnrad 12 in einem Drehsinn gedreht, der gleich demjenigen der Speichertrommel 2 ist. Da jedoch die vier Zahnräder 8, 9, 11, 12 ein Untersetzungsgetriebe bilden, wie dies oben erläutert worden ist, dreht das vierte Zahnrad 12 mit einer Drehgeschwindigkeit, die von der Drehgeschwindigkeit der Speichertrommel 2 verschieden ist. Im vorliegenden Ausführungsbeispiel ist diese Drehgeschwindigkeit des vierten Zahnrades 12 etwa halb so groß, wie die Drehgeschwindigkeit der Speichertrommel 2, genau bei der oben erwähnten beispielsweise Zähnezahl beträgt das Verhältnis der Drehgeschwindigkeiten 1 : 0,4096.

Das vierte Zahnrad 12, das mit der Welle 13 drehfest verbunden ist, bewirkt, daß sich die Welle 13 mit dem damit ebenfalls fest verbundenen Arber 29 dreht und daß sich schließlich das innere Ende 4 der Spiralfeder 3, welches mit dem Arber 29 verbunden ist, ebenfalls mit der vorgängig erwähnten Drehzahl und im vorgängig erwähnten Drehsinn dreht. Weil nun das innere Ende 4 der Spiralfeder 3 ihrem äußeren Ende 5 nachläuft, kommen die einzelnen Bandabschnitte der Spiralfeder 3, im Gegensatz zum bekannten Fall, bei welchem das innere Ende 4 ortsfest ist, nach einer größeren Anzahl Umdrehungen zum satten Anliegen. Das heißt, daß die Speichertrommel 2 bis zur gespannten Endstellung der Spiralfeder 3 mehr Umdrehungen als beim Stand der Technik möglich durchführen kann, was offensichtlich zur Folge hat, daß das Band 19 dementsprechend beträchtlich länger ausgebildet werden kann, wobei gleichzeitig das von der Spiralfeder 3 eingenommene Volumen gleich bleibt. Umgekehrt ist es möglich, bei gleichbleibender Länge des Bandes 19 das von der Spiralfeder 3 eingenommene Volumen zu verkleinern, so daß die für die Spiralfeder 3 notwendigen Abmessungen der gesamten Vorrichtung vermindert werden können.

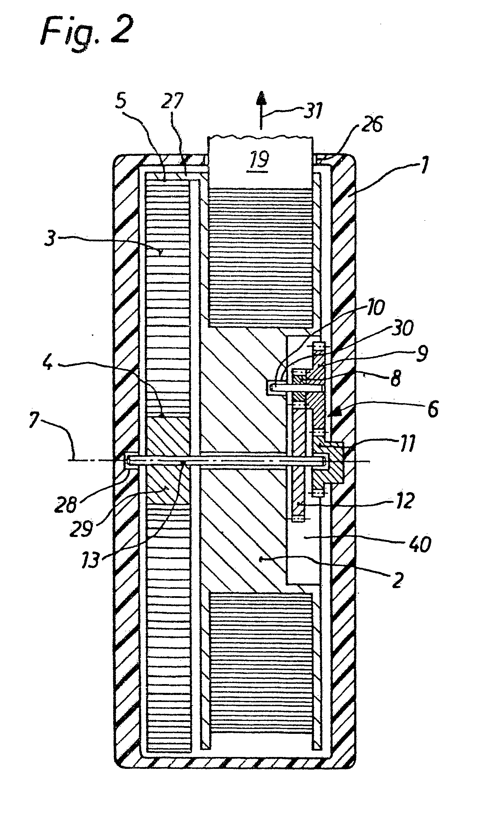

Das in der Fig. 2 gezeigte Ausführungsbeispiel ist im Aufbau und Betrieb identisch zu dem in der Fig. 1 gezeigten Ausführungsbeispiel mit der Ausnahme, daß das Getriebe 6 nicht neben, sondern in der Speichertrommel 2 angeordnet ist. Zu diesem Zweck ist in der Speichertrommel 2 eine das Getriebe 6 aufnehmende Ausnehmung 40 ausgebildet. Damit ergibt sich eine Platzersparnis in axialer Richtung der Vorrichtung. Weil das Ausführungsbeispiel nach Fig. 2 sonst in allen Teilen und im Betrieb gleich dem der Fig. 1 ist, wird auf eine, die sich auf die Fig. 1 beziehende Beschreibung wörtlich wiederholende Beschreibung der Fig. 2 verzichtet.

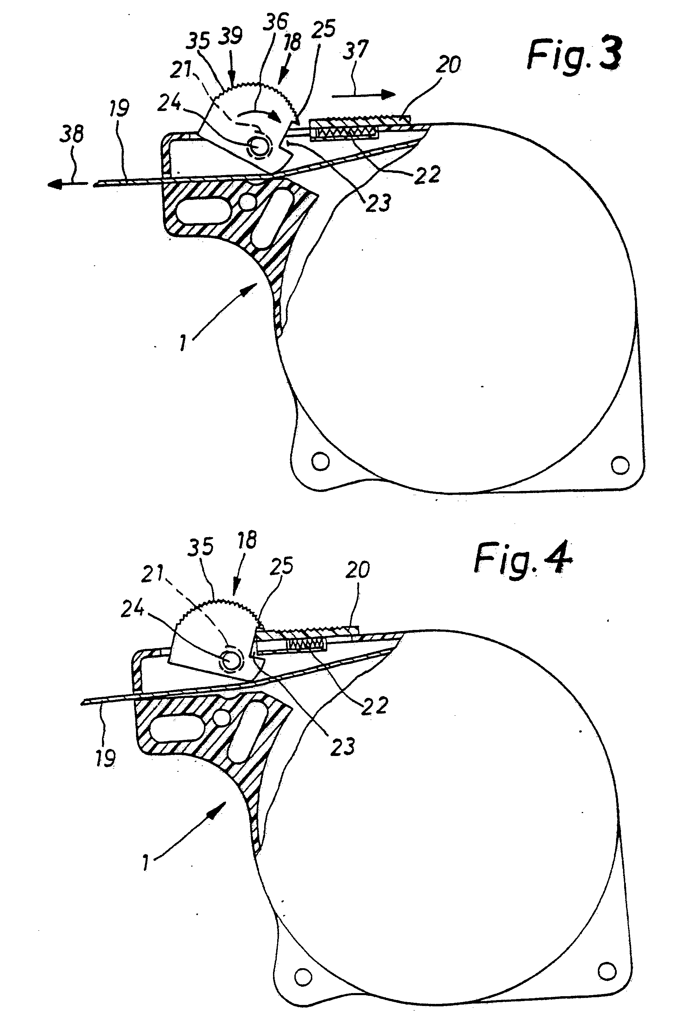

Es wird nun Bezug auf die Fig. 3 und 4 genommen. Um das Band 19 in der ausgezogenen Stellung zu arretieren, derart, daß es nicht aufgrund der Krafteinwirkung der Spiralfeder 3 wieder in das Gehäuse 1 gezogen wird, ist eine Sperr- bzw. Arretieranordnung vorhanden. Dazu ist ein Sperrkörper 18 auf einer Tragwelle 24 exzentrisch angeordnet, welche Tragwelle 24 im Gehäuse 1 gelagert ist. Zur einfacheren Betätigung desselben weist ein Abschnitt des Sperrkörpers 18 z. B. Rändelungen 35 auf. Der Sperrkörper ist durch eine Feder 21 in einer Richtung vorgespannt, die mit dem Pfeil 36 in der Fig. 3 gezeigt ist. Dieser Sperrkörper weist bei einer Stelle seines Umfangs eine Ausdehnung 23 auf. Im Gehäuse 1 ist weiter ein Schieber 20 in der Form einer Platte längsverschiebbar angeordnet. Dieser Schieber ist mit einer Druckfeder 22 versehen, welche ihn in Richtung des Pfeils 37 vorspannt, d. h., vom Sperrkörper 18 wegspannt.

In der Fig. 3 ist nun der Sperrkörper 18 in seiner Eingriffstellung mit dem Band 19 gezeigt, in welche er aufgrund der Feder 21 vorgespannt ist. Wird auf das Band 19 ein in Richtung des Pfeils 38 gerichteter Zug ausgeübt, wird dieser exzentrisch gelagerte Sperrkörper 18 noch fester gegen das Band gedrückt, derart, daß es nicht weiter ausgezogen werden kann, und somit arretiert ist. Die Federkraft der Feder 21 des Sperrkörpers 18 ist jedoch derart groß, daß sie der durch die Spiralfeder 3 ausgeübten Kraft entgegenwirken kann, so daß das Band 19 auch nicht aufgerollt werden kann, also in jeder ausgezogenen Lage arretiert ist.

In der Fig. 4 ist nun die Freigabestellung gezeigt. Dabei ist der Sperrkörper 18 in einer in bezug auf die Fig. 4 im Gegenuhrzeigersinn gerichtete Richtung gedreht worden, so daß er nicht mehr im Eingriff mit dem Band 19 ist. Dabei kann er in dieser Freigabestellung durch den Schieber 20 seinerseits arretiert werden. Dazu wird der Schieber 20 in die Ausnehmung 23 des Sperrkörpers 18 hineingeschoben. Da nun der Sperrkörper 18 in Richtung des Pfeils 36 vorgespannt ist, liegt die Flanke 25 der Ausnehmung 23 unter Ausübung eines Druckes auf dem Schieber 20 an, derart, daß er seinerseits vom Sperrkörper 18 arretiert ist. Offensichtlich ist der bei der Flanke 25 der Ausnehmung 23 ausgeübte Druck genügend groß, um die Rückstellkraft der Feder 22 des Schiebers zu überwinden.

Die Betätigung der Sperrvorrichtung ist z. B. mittels lediglich des Daumens durchführbar, wozu dann offensichtlich die Abmessungen derselben dem menschlichen Daumen anzupassen sind. Die Grundstellung, d. h., Eingriffsstellung des Sperrkörpers 18 ist in der Fig. 3 gezeigt. Soll nun das Band 19 in Richtung des Pfeils 38 ausgezogen werden, wird bei diesem Ausführungsbeispiel mit dem Daumen der Schieber 20 gegen den Sperrkörper 18 bewegt, wobei die Daumenspitze gegen die Rändelungen 35 des Sperrkörpers 18 wirkt, so daß er in der Zeichnung im Gegenuhrzeigersinn gedreht wird, so daß der Schieber 20 in die Ausnehmung 23 hineingeschoben werden kann, und dann der Sperrkörper 18 in Offenstellung gehalten wird. So kann das Band beliebig weit ausgezogen werden. Um nun das Arretieren des Bandes zu erzielen, wird lediglich mit dem Daumen der Schieber 20 in Richtung des Pfeils 37 gezogen oder alternativ der Sperrkörper 18 mit der Daumenspitze noch etwas weiter im Gegenuhrzeigersinn gedreht, derart, daß die Arretierwirkung des Schiebers 20 aufgehoben wird, indem er von seiner Feder 22 nach rechts verschoben wird, und der Sperrkörper 18 durch ein Entfernen des Daumens von ihm in die Sperrstellung der Fig. 3 zurückgedreht.

Soll das Band 19 wieder auf die Speichertrommel 2 zurück aufgerollt werden, wird der Sperrkörper 18 wieder im Gegenuhrzeigersinn gedreht (dies kann auch mit einem Niederdrücken des Bereiches 39 des Sperrkörpers 18 erzielt werden), so daß der Sperrkörper 18 sich in die in der Fig. 5 gezeigten Stellung dreht, das Band 19 freigibt, welches dann durch Einwirken der Spiralfeder 3 in bekannter Weise auf die Speichertrommel 2 aufgewickelt und zurückgezogen wird. Es ist hier nicht unbedingt notwendig, daß der Schieber 20 zum Eingriff in den Sperrkörper 18 gebracht wird, obwohl dies bei weit ausgezogenem Band 19 eine Erleichterung der Handhabung der Vorrichtung bildet.

Eine bemerkenswerte Folge dieser Sperrkörperanordnung ist die, daß eine auf das arretierte Band 19 einwirkende Spannkraft unmittelbar auf das Gehäuse 1 und nicht auf die Speichertrommel 2 wirkt. So werden die Lagerstellen, das Getriebe, die Speichertrommel etc. im Gehäuse nicht beansprucht. Auch ist die Auszugslänge des Bandes stufenlos fixierbar.

## Patentansprüche

1. Vorrichtung zum Aufwickeln eines langgestreckten, aufrollbaren Gegenstandes, mit einem Gehäuse (1), in welchem eine Speichertrommel (2) angeordnet ist, und mit einer Spiralfeder (3), die die Speichertrommel (2) in Aufwickelrichtung vorspannt, und ein inneres (4) und ein äußeres mit der Speichertrommel (2) verbundenes Ende (5) aufweist, wobei das innere Ende (4) der Spiralfeder (3) mittels eines Getriebes (6) mit dem äußeren Ende derselben verbunden ist, welches Getriebe (6) bewirkt, daß bei einer mit einer ersten Umdrehgeschwindigkeit erfolgenden Drehung des äußeren Endes (5) der Spiralfeder (3) um deren Mittelachse (7) das innere Ende (4) der Spiralfeder (3) im gleichen Drehsinn wie das äußere Ende (5) derselben jedoch mit einer zweiten, kleineren Umdrehgeschwindigkeit um die Mittelachse (7) dreht, welche Speichertrommel (2) unverzahnt ist und welches Getriebe (6) ein erstes (8) und ein zweites Stirnzahnrad (9) unterschiedlicher Zähnezahl aufweist, welche Zahnräder (8, 9) drehfest miteinander und mit einer Welle (10) verbunden sind, die exzentrisch zur Mittelachse (7) angeordnet und innerhalb des Spulenkernes der Speichertrommel (2) in derselben einseitig und drehbar gelagert ist, ein drittes Zahnrad (11) aufweist, welches mit dem Gehäuse (1) fest verbunden ist und mit dem zweiten Zahnrad (9) kämmt, und ein viertes Zahnrad (12) aufweist, das mit dem ersten Zahnrad (8) kämmt und mit einer Welle (13) verbunden ist, wobei die Welle (13) des vierten Zahnrades (12) im dritten, feststehenden Zahnrad (11) drehbar gelagert ist, die Speichertrommel (2) ihrerseits auf dieser Welle (13) drehbar gelagert ist, und das innere Ende (4) der Spiralfeder (3) mit dieser Welle (13) verbunden ist.

2. Vorrichtung nach Anspruch 1, dadurch gekennzeichnet, daß das erste Zahnrad (8) weniger Zähne als das zweite Zahnrad (9) und das dritte Zahnrad (11) weniger Zähne als das vierte Zahnrad (12) aufweist.

3. Vorrichtung nach Anspruch 2, dadurch gekennzeichnet, daß das erste Zahnrad (8) gleich viel Zähne wie das dritte Zahnrad (11) und das zweite Zahnrad (9) gleich viel Zähne wie das vierte Zahnrad (12) aufweist.

4. Vorrichtung nach Anspruch 1, wobei im Gehäuse (1) ein Sperrkörper (18) vorhanden ist, der dazu bestimmt ist, den langgestreckten Gegenstand (19) in ausgezogener Stellung gegen die Vorspannkraft der Spiralfeder (3) zu halten, welcher Sperrkörper (18) zwischen einer Freigabestellung und einer Eingriffsstellung bewegbar ist, dadurch gekennzeichnet, daß der Sperrkörper (18) in der Freigabestellung mittels eines Schiebers (20) arretiert ist, wobei der Schieber (20) in der Freigabestellung durch den Sperrkörper (20) festgehalten ist.

5. Vorrichtung nach Anspruch 4, dadurch gekennzeichnet, daß der Sperrkörper (18) mittels einer Feder (21) gegen die Eingriffsstellung vorgespannt ist, und daß der Schieber (20) mittels einer Feder (22) vom Sperrkörper (18) weg vorgespannt ist.

6. Vorrichtung nach Anspruch 4, dadurch gekennzeichnet, daß der Sperrkörper (18) eine Ausnehmung (23) zur Aufnahme des Schiebers (20) aufweist, wobei der Schieber (20) in der Freigabestellung des Sperrkörpers (18) in die Ausnehmung (23) hineinragt.

7. Vorrichtung nach Anspruch 4, dadurch gekennzeichnet, daß der Sperrkörper (18) mittels einer Tragwelle (24) im Gehäuse (1) exzentrisch gelagert ist.

gelagert ist.

8. Vorrichtung nach Anspruch 6, dadurch gekennzeichnet, daß in der Freigabestellung des Sperrkörpers (18) dieser mit einer Flanke (25) der Ausnehmung (23) auf den Schieber (20) einen Druck ausübt, um den Schieber (20) zu arretieren.

## Claims

1. A winding and reeling device for an elongated, coilable member, including a casing (1) and a storage reel (2) located therewithin, and including a spiral spring (3) which rotationally biasses the storage reel (2) in its take-up rotational direction and comprises an inner (4) and an outer end (5) connected to the storage reel (2), the inner end (4) of the spiral spring (3) being connected by the intermediary of a gear (6) to the outer end (5) thereof, whereby upon rotation of the outer end (5) of the spiral spring (3) around its center axis (7) at a first rotational speed the gear (6) causes the inner end (4) of the spiral spring (3) to rotate around the center axis (7) in the same rotational direction, however at a second, slower totational speed, which storage reel (2) is a toothless reel (2) and which gear (6) includes a first (8) and a second spur gear wheel (9), which spur gear wheels have a differing number of teeth, the spur gear wheels (8, 9) being rigidly connected to each other and to a shaft (10) mounted at one end only and rotationally on said reel (2) eccentrically to the center axis (7) and inside of the spool core of the reel (2), includes further a third spur gear wheel (11) rigidly connected to the casing (1) and meshing with the second spur gear wheel (9), and includes a fourth spur gear wheel (12) meshing with the first spur gear wheel (8) and being rigidly connected to a further shaft (13), which further shaft (13) of the fourth spur gear wheel (12) is rotatably supported in the third, unmovable spur gear wheel (11), which reel (2) is in turn rotatably supported on this further shaft (13) and which inner end (4) of the spiral spring (3) is connected to this shaft (13).

2. The device of claim 1, characterized in that the first gear wheel (8) has less teeth than the second gear wheel (9) and the third gear wheel (11) has less teeth than the fourth gear wheel (12).

3. The device of claim 2, characterized in that the first gear wheel (8) and the third gear wheel (11) have the same number of teeth and the second gear wheel (9) and the fourth gear wheel (12) have the same number of teeth.

4. The device of claim 1, including a locking member (18) within the casing (1) intended to lock the elongated member (19) in a drawn out position against the biassing force of the spiral spring (3), which locking member (18) is displaceable between a release position and a locking position, characterized in that the locking member (18) is locked in the release position by a slider (20), which slider (20) is locked in the release position by the locking member (18).

5. The device of claim 4, characterized in that the locking member (18) is biassed by means of a spring (21) into the locking position, and in that the slider (20) is biassed by means of a spring (22) away from the locking member (18).

6. The device of claim 4, characterized in that the locking member (18) comprises a recess (23) for receiving the slider (20), which slider (20) protrudes into the recess (23) when the locking member (18) is in its release position.

7. The device of claim 4, characterized in that the locking member (18) is eccentrically supported in the casing (1) by means of a supporting shaft (24).

8. The device of claim 6, characterized in that the locking member (18) in its release position exerts by means of a flank portion (25) of the recess (23) a pressure onto the slider (20) in order to lock the slider (20).

**Revendications**

1. Dispositif pour l'enroulement d'un objet allongé envidable comportant un carter (1), dans lequel est disposé un tambour emmagasineur, et un ressort spiral (3) qui soumet à une tension préalable en direction d'enroulement le tambour emmagasineur (2) et présente une extrémité intérieure (4) et une extrémité extrérieure (5) reliée à ce dernier (2), tandis que l'extrémité intérieure de ce même ressort spiral (3) est reliée à l'extrémité extérieure de celui-ci au moyen d'un train d'engrenages (6) qui fait que, dans le cas d'une rotation de l'extrémité extérieure (5) du ressort spiral (3) autour de l'axe central (7) de ce dernier ayant lieu à une première vitesse de rotation, l'extrémité intérieure (4) du ressort spiral (3) tourne autour de l'axe central (7) dans le même sens que l'extrémité extérieure (5) de celui-ci, mais avec une deuxième vitesse de rotation, plus faible, le tambour emmagasineur (2) n'étant pas denté et le train d'engrenages (6) comportant une première roue dentée droite (8) et une deuxième (9) de nombres de dents différents, lesquelles sont assemblées sans possibilité de rotation mutuelle entre elles et à un arbre (10) qui est placé excentriquement à l'axe central (7) et repose unilatéralement, et avec possibilité de rotation, à l'intérieur du moyeu de la bobine du tambour emmagasineur (2) dans ledit tambour, le train d'engrenages comportant en outre une troisième roue dentée (11) reliée à demeure au carter (1) et engrenant avec la deuxième roue dentée (9) ainsi qu'une quatrième roue dentée (12) qui engréne avec la première (8) et est reliée à un arbre (13) qui s'appuie, avec possibilité de rotation, à l'intérieur de la troisième roue dentée (11), fixe, le tambour emmagasineur (2) reposant lui-même, avec possibilité de rotation, sur cet arbre (13) et l'extrémité intérieure (4) du ressort spiral (3) étant reliée audit arbre (13).

2. Dispositif selon la revendication 1, caractérisé par le fait que la première roue dentée (8) comporte moins de dents que la deuxième (9), et la troisième roue dentée (11) moins que la quatrième (12).

3. Dispositif selon la revendication 2, caractérisé par le fait que la première roue dentée (8) comporte autant de dents que la troisième (11), et la deuxième roue dentée (9) autant que la quatrième (12).

4. Dispositif selon la revendication 1, avec présence dans le carter (1) d'un organe de blocage (18) destiné à maintenir à l'encontre de la force de précontrainte du ressort spiral (3) l'objet allongé (19) en position d'extraction et mobile entre une position de déblocage et une position d'enclenchement, caractérisé par le fait que l'organe de blocage (18) est verrouillé dans la position de déblocage au moyen d'un tiroir (20) qui est arrêté dans la position de déblocage par ledit organe de blocage (20).

5. Dispositif selon la revendication 4, caractérisé par le fait que l'organe de blocage (18) est soumis à une tension prélable vers la position d'enclenchement au moyen d'un ressort (21), et le tiroir (20) à une tension préalable en éloignement de l'organe de blocage (18) au moyen d'un autre ressort (22).

6. Dispositif selon la revendication 4, caractérisé par le fait que l'organe de blocage (18) comporte une carité (23) pour accueillir le tiroir (20), ledit tiroir (20) pénétrant dans cette cavité (23) dans la position de déblocage de l'organe de blocage (18).

7. Dispositif selon la revendication 4, caractérisé par le fait que l'organe de blocage (18) repose excentriquement dans le carter (1) au moyen d'un arbre support (24).

8. Dispositif selon la revendication 6, caractérisé par le fait que, dans la position de déblocage de l'organe de blocage (18), de dernier exerce par un flanc (25) de la cavité (23) une compression sur le tiroir (20) afin de verrouiller ledit tiroir (20).

**Fig.1**

## Fig. 2

Fig. 3

Fig. 4